# EUROPEAN PATENT SPECIFICATION

(11) **EP 1 152 653 B1**
(45) Date of publication and mention of the grant of the patent: **14.05.2003**
(21) Application number: 00910693.1
(22) Date of filing: 23.02.2000
(51) Int. Cl.: A01G 1/00, A01C 1/04

(54) **SOD COMPRISING AGRICULTURAL COMPONENTS PARTICULARLY FOR FORMING LAWNS, AND METHOD FOR PRODUCING IT**
GRASSTÜCK MIT LANDWIRTSCHAFTLICHEN ZUSAMMENSETZUNGEN INSBESONDERE ZUM FORMEN VON RASEN UND VERFAHREN ZU SEINER HERSTELLUNG
PLAQUE DE GAZON COMPRENANT DES ELEMENTS AGRICOLES UTILISEE PLUS PARTICULIEREMENT POUR FORMER DES PELOUSES, PROCEDE DE PRODUCTION ASSOCIE

(30) Priority: 24.02.1999 IT VR990021
(43) Date of publication of application: 14.11.2001
(73) Proprietor: Zenti, Maximiliano, 37024 Negrar (IT)
(72) Inventor: Zenti, Maximiliano, 37024 Negrar (IT)
(74) Representative: Modiano, Guido, Dr.-Ing.
(86) International application number: EP0001476
(87) International publication number: WO00049851

(56) References cited:
- WO-A-98/56232
- US-A- 4 414 776
- US-A- 4 584 790
- US-A- 4 786 550
- US-A- 5 860 245

## Description

### Technical Field

The present invention relates to the production of a modular sod of cultivation soil which comprises all the components and ingredients required for preservation, subsequent laying, germination and growth of grassy species, such as grasses, for forming lawns and grassy layers or for growing other plants, said sod being particularly useful both in professional and hobby gardening.

### Background art

Traditionally, lawns and grassy layers not for agricultural use are usually formed by the following steps.

First of all, a subsoil is prepared by clearing the area away of rocks, rubble, waste, shrubs and weeds, tilling the soil from a minimum of 15 cm to a maximum of 150 cm of depth, performing thorough fertilization with organic fertilizers and phosphate and potassium fertilizers, and providing drainage systems which make use of sand, gravel and optionally deeply buried pipes, leveling and rolling the entire surface.

This preparation of the subsoil is common for all lawns, although there are variations depending on whether an ornamental lawn or a sports field is to be provided.

Two methods, seeding and sodding, are currently used in order to cover the soil thus prepared with a layer of grass. Sodding consists in laying grass sods previously cultivated elsewhere, whereas with seeding the grass is grown entirely on-site.

These two methods of seeding and sodding necessarily entail particular care.

Seeding must be performed only in certain periods of the year at suitable adequate temperatures. At latitudes of northern Italy, for example, seeding is performed between mid-March and mid-October. In order to have a more moist soil and avoid the presence of rhizomes of weeds, seeding is preferably performed between the end of summer and the beginning of autumn.

Seeding must be performed by uniformly scattering seeds on the surface and at a correct surface density, and thus it is almost always necessary to resort to seeding machines or to an expert sower when seeding is performed manually, as is usually the case for small areas.

After distributing the seeds, said seeds must be covered with a thin layer of earth and peat and the soil is rolled in order to ensure adhesion of the seed to the soil. These operations must be performed unless seeding is performed by casting a mixture of seeds, bonding agent and sawdust, e.g. on the slopes.

Subsequently, erosion of the topsoil due to rain and infestation caused by weed seeds may occur.

After seeding, the soil must be watered regularly for several months.

Sodding is a much faster revegetation method with lower weed invasion and no surface erosion and soil subsidence in case of rain. However, the varieties of grasses suitable for the sodding method are limited. Moreover, it is necessary to have wide areas available and suitable procedures for cultivating the grass on the sods must be followed.

Grassy sods, which are generally 4 or 5 mm thick, are uprooted, optionally rolled up, transported and laid on the final soil, and all this must occur in no more than one-and-a-half days, unless the sods are climate-controlled.

Before the sods are laid, one must ensure that the soil is soft, moist and rich in organic substances. After laying, gentle rolling is performed in order to ensure adequate contact with the soil, and any gaps between the sods are filled with sand and peat. Regular watering in the weeks after laying is also important.

Prior art document WO 98/56232 discloses a plant seed germination method as claimed in the preambles of claims 1 and 2,

### Disclosure of the Invention

The main object of the present invention is to provide a sod for forming lawns or other cultivations, which can be stored for a long time in environmental conditions without problems, so that it can be produced all over the year with no interruption.

Another object of the present invention is to provide a method for producing sods and for providing lawns, which is extremely simple to carry out.

According to a first aspect of the present invention, there are provided methods of preparing a plant cultivation, particularly a lawn, as defined in the claims 1 and 2.

Advantageously, after drying the sod can be packaged in a packaging material for storage and transport purposes.

According to another aspect of the present invention, there is provided a sod for cultivating plants as in claim 14 which comprises a seeded seeding bed which has already received an addition of fertilizer and a suitable bonding agent for maintaining the parallelepiped-like shape given to it.

### Brief description of the drawings

Further characteristics and advantages of the invention will become better apparent from the detailed description of some non-exclusive embodiments thereof, illustrated only by way of non-limitative examples in the accompanying drawings, wherein:
Figures 1 and 2 shows each a schematic view of the procedure for obtaining sods according to the invention, and
Figure 3 is a perspective partial view of a store where sods obtained according to the invention are preserved.

### Ways of carrying out the invention

### Example 1

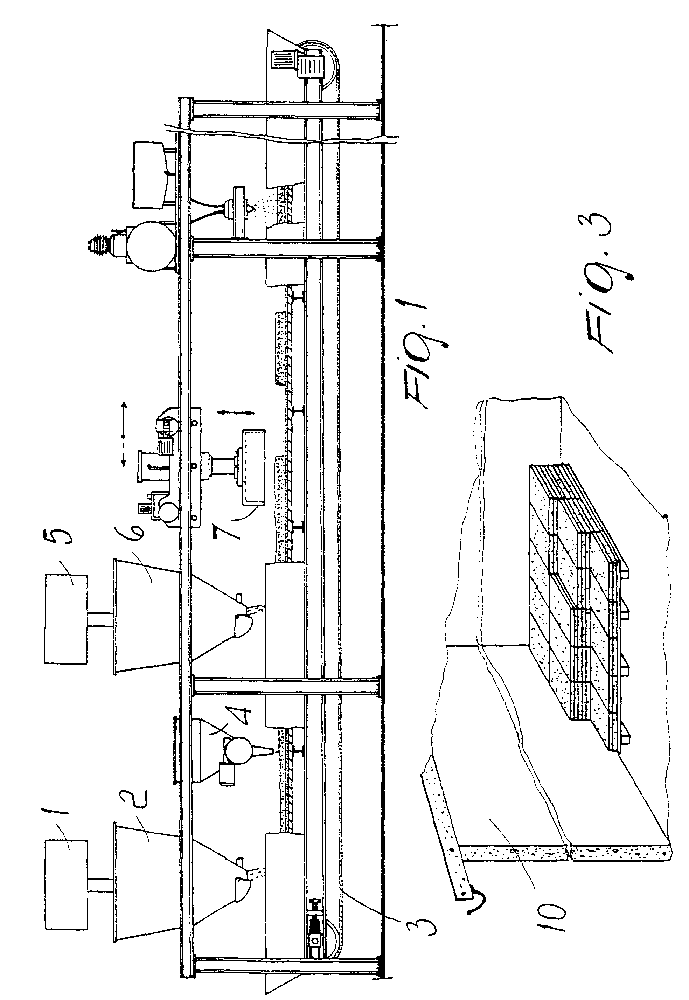

A lawn was provided in a shaded area of a home garden and parts of this area were decorated with jewelweeds - see Figure 1 of the drawings.

In order to provide a grassy layer, a mixer 1 was first used to mix the following components so as to obtain a granular mix:
-- 80-90% by volume of inert silica sand
-- 10-20% by volume of peat
-- potato starch as natural bonding agent

The mix was poured into a hopper 2 and from there it was deposited onto a conveyor belt 3 so as to form a non-interrupted layer of 1.5 to 8 cm.

Further along the path, the seeding machine 4 deposited onto the layer, carried by the conveyor belt 3, the mixture of seeds of the following species:
-- 15% Agrostis tennis
-- 30% Festuca ovina
-- 15% Festuca rubra commutata
-- 20% Poa nemoralis
-- 20% Poa pratensis

Inside the mixer 5, instead, a very rich mixture of fertilizer was prepared which also contained herbicide according to the following components: inert silica sand, peat, fertilizer providing slow release of nitrogenous substances, with phosphate and potassium, dicotyledon-selective herbicide, potato starch as natural bonding agent.

The preparation was fed beneath the hopper 6, from where it was poured onto the conveyor belt, so as to form a 1/2-cm layer of soil which covered the seeds deposited earlier.

Through a press 7, the stratified mixture was die-cut or extruded through an extrusion die in order to form tiles, for example hexagonal in shape, measuring approximately 1.5 to 8 cm in thickness.

Instead of extruding the tiles at the end, it is possible to deposit successive layers in suitable molds in reverse order with respect to that of the above description. The mixture can be settled by means of vibrations imparted to the mold and left to rest for a short time, so that the bonding agent begins to bond. Finally, by turning over the molds, the seeds, the fertilizer and the herbicide lie directly below the surface of the tile.

The seeds were placed near the surface since that is their natural level, from which, after moistening, in the appropriate season and at suitable temperature, the bud will emerge promptly. The herbicide is useful only if it is located close to the surface in order to hinder germination of weed seeds carried by the wind or other carriers. A chemical fertilizer also was placed at a high level in order to be near the seeds, since due to watering it tends to percolate downwards, where there are no roots as they are not formed yet.

The chemical fertilizer is the first nutritional substance which provides minerals to the buds, even because said buds may not be formed straightaway and microorganisms and bacteria responsible for decomposition of any organic material may not be immediately available or become fully active.

In order to continuously cover the surface to be revegetated, it is possible in particular to use sods having geometric shapes which are commonly used for floor tiles, i.e. polygonal shapes, such as squares, rectangles and regular hexagons, octagons and triangles. Among these, however, preference is given to squares and rectangles for packaging and storing reasons. The hexagon has the advantage of having obtuse angles and therefore somewhat less brittle corners.

Potato starch was used as a bonding agent in this example, but as an alternative it is generally possible to use bonding agents obtained from plants (starches, fecula, flours, cellulose derivatives) or from animal tissues (fish glue, bone glue, skin glue), so long as they are biodegradable. Preferably bonding agents based on synthetic polymers are not used.

The bonding agent and other colloidal substances, such as humus and clay, cause the final structure of the resulting sod to be an aggregate of glomerules, whereby adequate porosity of the soil is ultimately obtained. The porosity involves micropores inside the glomerules, which are useful for future absorption of water, and macropores between the glomerules, which are useful for air circulation that is also very important for the roots. Porosity of the sod may also assist in drawing, by capillary action, water from subsoil in case of accidental lack of watering.

The formed tiles, carried by the conveyor belt 3 or by a second conveyor belt (not shown in the drawings), were laid in a store 10 provided with apertures to ensure ventilation, where the starch is set, thereby obtaining a suitable loss of moisture before packaging. Instead of a greenhouse, it is possible to use any source of heat at low temperature or any other dehumidification system. The same can also be done beforehand with the various materials before being mixed, although there is a higher risk of them being infested by weed seeds and spores and thus it is convenient to use dry materials which are possibly appropriately packaged. It is important that the components of the mixture and particularly the bonding agent do not release too much moisture to the seeds in the steps before dehumidification.

The tiles were then packaged under vacuum with impermeable films and stored.

After several months, they were transported to the laying site, where a subsoil had been prepared which consisted simply of 5 to 25 cm of growing medium on a main gravel layer with good permeability. The subsoil must of course have a surface which is arranged according to a final contour to be achieved and must then be prepared so as to form the desired flat areas, elevations and depressions.

The tiles were laid at the end of March and watered with 5 liters of water per square meter every day in the early hours of the morning until the grass emerged. Subsequent watering was less frequent but more abundant, thus maintaining the average amount of water supplied. Once the tiles were removed from the packages, placed on the ground and moistened, the natural physical and biochemical phenomena of the soil were triggered. The slow-release fertilizer began to release its mineral salts into the solving water. Bacterial species taking part in nitrogen cycle transformations began to form and become active. In addition to other types of bacteria, many microorganisms such as algae, actinomycetes, protozoa were also formed, not to mention the many higher species. All these living beings contribute to the formation of humus and mineral substances, the decomposition of organic matter and bonding agent, the aggregation of particles and the churning of the soil.

If it is required to obtain grass bud quickly, one can perforate the impermeable packagings and moisten the tiles even before they are transported and laid, so as to activate their biochemical activity immediately.

The tiles have relatively precise geometric dimensions, so that no gaps remain between them during laying. However, if laying is executed in a hurry or there are sudden variations in level (steep elevations and depressions) and gaps are delimited between the tiles, the gaps can be filled with sand. This is useful, even because in laid-on gardens it is advisable to periodically perform more or less dense corings in the soil and fill the resulting holes with sand or sand mixed with peat. This operation, which is commonly performed on golf greens or sports fields, is known as aeration followed by plugging and is designed to eliminate compacting of the soil, to increase the percentage of macropores, to assist root growth, and to improve microbiological activity and permeability to water.

It was found to be easy and creative to form flowerbeds including colorful floral patterns by alternating the tiles that formed the grassy sods described above with others which contained seeds of impatiens, which thrive in shaded areas and are suitable for forming borders and patches. Said tiles had been produced with the above described process and had the following composition:
-- soil composed of 1/3 sand, 1/3 clay and silt, 1/3 peat and amendments obtained from biocomposting;
-- fertilizer constituted by algae extract;
-- fish glue as natural bonding agent;
-- selective herbicide for monocotyledons;
-- seeds of perennial Impatiens Walleriana (impatiens).

The tiles can be colored on the surface with a harmless dye which makes it possible to distinguish them according to their type and to visualize them better during laying, when patterns are to be formed.

The tiles at the borders of the lawn or at the borders of the flowerbeds can be cut, if necessary, in order to obtain the right size and follow the border, especially in the case of lawns with curvilinear edges.

### Example 2

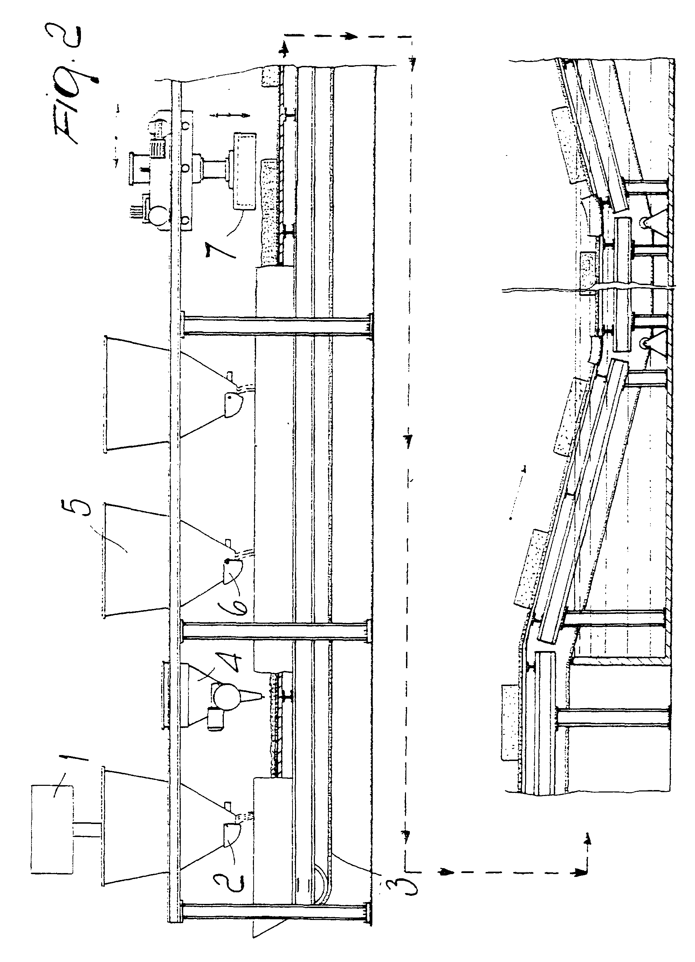

Reference should be made to Figure 2 for this example.

A sports playing field according to DIN standards was provided by forming the entire cultivation medium by means of transportable blocks. Only the drainage system and, above it, a layer of 10-15 cm of fine gravel were prepared on-site.

The blocks were again produced by means of a conveyor belt on which hoppers dropped their contents in successive locations.

A hopper 2 contained a mixture of dry sands, dry-mixed beforehand by a mixer 1, so as to produce soil having the following grading:
-- maximum content of particles having a diameter of 0.02 mm: 10% by weight;
-- maximum content of particles having a diameter of 0.06 mm: 18% by weight;
-- maximum content of granules having a diameter of 4 mm: 15% by weight;
-- maximum diameter of the contained granules: 8 mm

The hopper 2 poured a 2-cm layer of this soil onto a conveyor belt 3.

Immediately thereafter, a seeding machine 4 planted at an appropriate depth the following mixture of seeds:
-- 50-60% of 2 different varieties of Lolium perenne;
-- the remaining 50-40% of 3 different varieties of Poa pratensis.

This was followed by a hopper 5 which deposited chemical fertilizer and, in a downward location, a hopper 6 which deposited selective herbicide.

The layer thus obtained was then divided into blocks shaped like a parallelepiped by a die-cutter 7.

The blocks were then immersed in a tank 8, which contained a natural bonding agent which adhered, forming a layer on the entire outer surface, and while setting wrapped and protected the block, which would otherwise have been rather brittle. The same compacting can be achieved by spraying bonding agent onto the sods within a suitable chamber.

The block covered by set bonding agent, if kept dry, did preserve itself for a long time without using impermeable enclosures, whereas once it was laid and regularly watered the natural bonding agent dissolved and rapidly degraded, leaving the block free.

By placing the blocks on a layer of gravel prepared on-site and by watering them systematically, the sports green developed normally.

The behavior of the sods illustrated in the above examples is simply that of carrying out natural biochemical and physical activities of the soil, already mentioned above in connection with the production processes.

The invention is susceptible of numerous modifications and variations, all of which are to be considered as falling within the scope of the invention as defined by the claims. Thus, for example, the invention can be used not only for generating a lawn or a grassy layer, but also for floral borders used on the edges of ornamental lawns or pillows, wisps and cascades of flowers in flowerbeds. The invention is particularly suitable for perennial flowers which easily reproduce by seeds.

The invention can also be applied to edible species, such as many vegetables, which reproduce well from dry-stored seeds.

Almost all vegetables, even bulky ones (for example pumpkins and egg-plants) can develop well in a few centimeters of thickness. One must also consider that some aromatic plants (such as basil and parsley) are not used in large amounts and require very little space and an extremely small amount of soil. The invention is therefore very convenient for anyone who wishes to make, for example, a "hanging kitchen-garden".

The invention can also be used with inferior plants, such as the subkingdom Thallophyta and for mushroom cultivation.

The invention is applicable to all kinds of reproduction in the plant kingdom: i.e. sexual reproduction, asexual reproduction and vegetative reproduction.

A number of definitions in the present specification are given hereafter for correct interpretation of the claims:
**Seed:** the term designates the reproductive germs of phanerogam cormophyte plants, but is used here with a necessarily broader meaning, extending it to the entire plant kingdom, and is meant to indicate these parts of the plants that are designed for their germination, whether derived from gamic, agamic or vegetative reproduction. These parts can therefore be constituted by seeds, spores, rhizomes, bulbs and bulbils, gems, tubers or parts thereof, fragments of branches or of other parts of the plant.
**Seeding bed:** a material, usually fertile soil, in which germination of plants and development of their underground parts are possible.
T**exture or grading:** the percentage ratio among the various solid particles of the soil, graded according to their dimensions. The graded parts of the soil are constituted by the skeleton and fine earth, which, in turn, comprises coarse sand, fine sand, silt and clay.
**Structure and porosity:** the concept given in the specification is repeated for the sake of clarity: colloidal substances such as humus and clay cause the structure of fertile soil to become an aggregation of glomerules rather than a compact mixture of components, so that one obtains an adequate porosity which is useful for the growth of plants. Said porosity is due to micropores, which are internal to the glomerules and useful for absorbing water, and to macropores between the glomerules that are useful for air circulation, which is a very important factor for the roots. The porosity of the sod can also assist in drawing, by capillary action, water from underground if watering is insufficient.
**Organic substance:** a substance comprising plant or animal residues in a more or less advanced state of decomposition. The substance can be already partially transformed by soil-dwelling organisms and microorganisms into elementary inorganic substances and humus.

## Claims

1. A method of preparing a plant cultivation, particularly a lawn, comprising
the following operating steps:
-- preparing a seeding bed and introducing seeds therein;
-- dividing the seeding bed into sods;
-- cohesion treatment, whereby the resulting sod is not brittle, makes it possible to maintain a geometric shape and allows proper handling until the laying step is completed;
-- nondestructive drying of the sod;
-- laying the sod and
moistening the sod before or after laying and regular watering afterwards, **characterized in that** said cohesion treatment is performed by laying a layer of adhesive on the entire outer surface of said sod.

2. A method of preparing a plant cultivation, particularly a lawn, comprising the following operating steps:
-- preparing a seeding bed and introducing seeds therein;
-- dividing the seeding bed into sods;
-- cohesion treatment, whereby the resulting sod is not brittle, makes it possible to maintain a geometric shape and allows proper handling until the laying step is completed;
-- nondestructive drying of the sod;
-- laying the sod and
moistening the sod before or after laying and regular watering afterwards, **characterized in that** said cohesion treatment is performed by adding a bonding agent during mixing.

3. The method according to claim 1 or 2, **characterized in that** after drying the sod is packaged in a suitable package for its preservation, storage and transport, preferably under vacuum.

4. The method according to claim 1, 2 and 3, **characterized in that** said preparation of a seeding bed comprises the dosage of the components and the mixing thereof.

5. The method according to claim 1 or 2, **characterized in that** said preparation of a seeding bed is obtained by depositing successive layers of various components.

6. The method according to any preceding claim, **characterized in that** said division into sods occurs by molding the mix in a template, die or by extrusion in the chosen sod shape.

7. The method according to any claim 1 to 5, **characterized in that** said division into sods occurs by die-cutting.

8. The method according to any preceding claim, **characterized in that** said seed insertion occurs by implantation with a seeding machine.

9. The method according to any preceding claim, **characterized in that** said introduction of seeds occurs by depositing a layer of seeds.

10. The method according to any preceding claim, **characterized in that** said nondestructive drying reduces the percentage of humidity in the seeding bed to the point at which seed germination is no longer possible and tends to preserve the possibility of rapid future revival of microorganisms activity without degrading the natural and chemical organic substances present in the seeding bed.

11. The method according to any preceding claim 1 to 9, **characterized in that** said drying is performed by exposure in a ventilated greenhouse.

12. The method according to any preceding claim 1 to 9, **characterized in that** said drying is provided by means of low-temperature heat sources and by air change.

13. A sod for cultivating plants, obtained with the method according to any preceding claim, comprising a seeded seeding bed including a fertilizer and wrapped or at least held together by a suitable organic bonding agent so as to maintain its shape.

14. The sod according to claim 13, **characterized in that** said bonding agent is biodegradable.

15. The sod according to claim 13, **characterized in that** said bonding agent comprises at least one colloidal substance.

16. The sod according to claim 15, **characterized in that** said bonding agent comprises glue of vegetable or animal origin.

17. The sod according to any claim 13 to 16, **characterized in that** said seeding bed comprises soil which includes mineral substances and at least one organic substance.

18. The sod according to claim 17, **characterized in that** said organic substance comprises one or more fertilizers.

19. The sod according to claim 17 or 18, **characterized in that** it comprises one or more selective herbicides which hinder the germination and growth of plants which are different from, and antagonists of, those whose growth is sought.

20. The sod according to any one of the preceding claims 13 to 19, **characterized in that** it has a geometric shape which makes it possible to cover continuously the surface to be revegetated.

## Patentansprüche

1. Verfahren zum Bereitstellen einer Pflanzenzüchtung, insbesondere eines Rasens, umfassend die folgenden Arbeitsschritte:
- Bereitstellen eines Samenbettes und Einbringen von Samen darein,
- Aufteilen des Samenbettes in Soden,
- eine Behandlung zum Zusammenhalt, wobei die sich ergebende Sode nicht brüchig ist, ermöglicht es, eine geometrische Form beizubehalten und erlaubt eine geeignete Handhabung bis der Schritt des Auslegens beendet ist,
- zerstörungsfreies Trocknen der Soden,
- Auslegen der Sode und Anfeuchten der Sode vor und nach dem Auslegen und nachfolgende regelmäßige Bewässerung, **dadurch gekennzeichnet, dass** die Behandlung zum Zusammenhalt durch Auslegen einer Klebstoff-Schicht auf die gesamte äußere Oberfläche der Sode durchgeführt wird.

2. Verfahren zum Bereitstellen einer Pflanzenzüchtung, insbesondere eines Rasens, umfassend die folgenden Arbeitsschritte:
- Bereitstellen eines Samenbettes und Einbringen von Samen darein,
- Unterteilen des Samenbettes in Soden,
- eine Behandlung zum Zusammenhalt, wobei die sich ergebende Sode nicht brüchig ist, ermöglicht es, eine geometrische Form beizubehalten und erlaubt eine geeignete Handhabung bis der Schritt des Auslegens abgeschlossen ist,
- zerstörungsfreies Trocknen der Sode;
- Auslegen der Sode und Befeuchten der Sode vor oder nach einem Auslegen und nachfolgendes regelmäßiges Bewässern, **dadurch gekennzeichnet, dass** die Behandlung zum Zusammenhalt durch Hinzufügen eines Bindemittels während eines Mischens durchgeführt wird.

3. Verfahren nach Anspruch 1 oder 2, **dadurch gekennzeichnet, dass** die Sode nach einem Trocknen für ihre Konservierung, Lagerung und einen Transport in eine geeignete Verpackung, vorzugsweise unter Vakuum, verpackt wird.

4. Verfahren nach Anspruch 1, 2 und 3, **dadurch gekennzeichnet, dass** das Bereitstellen von einem Samenbett das Zuteilen der Bestandteile und das Mischen davon umfasst.

5. Verfahren nach Anspruch 1 oder 2, **dadurch gekennzeichnet, dass** das Bereitstellen eines Samenbettes durch ein Abscheiden aufeinanderfolgender Schichten verschiedener Bestandteile erhalten wird.

6. Verfahren gemäß einem der vorangehenden Ansprüche, **dadurch gekennzeichnet, dass** die Unterteilung in Soden durch ein Formen der Mischung in einer Schablone, einer Hohlform oder durch eine Extrusion in der gewählten Sodenform erfolgt.

7. Verfahren nach einem der Ansprüche 1 bis 5, **dadurch gekennzeichnet, dass** die Unterteilung in Soden durch Stanzen erfolgt.

8. Verfahren gemäß einem vorangehenden Ansprüche, **dadurch gekennzeichnet, dass** das Einbringen des Samens durch Einpflanzen mit einer Aussaat-Maschine erfolgt.

9. Verfahren gemäß einem der vorangehenden Ansprüche, **dadurch gekennzeichnet, dass** das Einbringen der Samen durch ein Abscheiden einer Schicht von Samen erfolgt.

10. Verfahren gemäß einem der vorangehenden Ansprüche, **dadurch gekennzeichnet, dass** das zerstörungsfreie Trocknen den prozentualen Feuchtigkeitsgehalt in dem Samenbett auf den Punkt verringert, an dem eine Samen-Keimung nicht länger möglich ist, und der darauf gerichtet ist, die Möglichkeit einer schnellen, zukünftigen Wiederbelebung der Aktivität der Mikroorganismen zu erhalten, ohne die natürlichen und chemischen organischen, in dem Samenbeet vorhandenen Substanzen abzubauen.

11. Verfahren nach einem der Ansprüche 1 bis 9, **dadurch gekennzeichnet, dass** das Trocknen durch Exposition in einem belüfteten Gewächshaus durchgeführt wird.

12. Verfahren gemäß einem der Ansprüche 1 bis 9, **dadurch gekennzeichnet, dass** das Trocknen mittels Wärmequellen niedriger Temperatur und durch Luftaustausch durchgeführt wird.

13. Eine Sode zur Kultivierung von Pflanzen, die nach dem Verfahren einer der vorangehenden Ansprüche erhalten worden ist, umfassend ein besätes, einen Dünger enthaltendes und zur Erhaltung seiner Form eingehülltes oder zumindest durch ein geeignetes organisches Bindemittel zusammengehaltenes Samenbett.

14. Sode gemäß Anspruch 13, **dadurch gekennzeichnet, dass** das Bindemittel biologisch abbaubar ist.

15. Sode gemäß Anspruch 13, **dadurch gekennzeichnet, dass** das Bindemittel wenigstens eine kolloide Substanz umfasst.

16. Sode gemäß Anspruch 15, **dadurch gekennzeichnet, dass** das Bindemittel Klebstoff pflanzlichen oder tierischen Ursprungs umfasst.

17. Sode gemäß einem der Ansprüche 13 bis 16, **dadurch gekennzeichnet, dass** das Saatbett Erde umfasst, die mineralische Substanzen und wenigstens eine organische Substanz enthält.

18. Sode gemäß Anspruch 17, **dadurch gekennzeichnet, dass** die organische Substanz einen oder mehrere Düngemittel umfasst.

19. Sode gemäß Anspruch 17 oder 18, **dadurch gekennzeichnet, dass** sie ein oder mehrere selektive Herbizide umfasst, welche die Keimung und das Wachstum von Pflanzen behindern, die verschieden von und Antagonisten zu denjenigen sind, deren Wachstum angestrebt wird.

20. Sode gemäß einem der Ansprüche 13 bis 19, **dadurch gekennzeichnet, dass** sie eine geometrische Form aufweist, die es ermöglicht, die wiederzubewachsende Oberfläche ununterbrochen abzudecken.

## Revendications

1. Procédé de préparation d'une culture de plantes, en particulier un gazon, comprenant les étapes opératoires consistant à :
- préparer un lit de semence et d'y introduire des graines ;
- diviser le lit de semence en plaques de gazon ;
- faire un traitement de cohésion, moyennant quoi la plaque de gazon obtenue n'est pas fragile, peut maintenir une forme géométrique et permet une bonne manipulation jusqu'à ce que l'étape de déposition soit terminée ;
- sécher les plaques de gazon de manière non destructive ;
- déposer la plaque de gazon et l'humidifier avant ou après l'avoir posée et l'arroser régulièrement par la suite, **caractérisé en ce que** ledit traitement de cohésion est réalisé en appliquant une couche adhésive sur la totalité de la couche externe de ladite plaque de gazon.

2. Procédé de préparation d'une culture de plantes, en particulier un gazon, comprenant les étapes opératoires consistant à :
- préparer un lit de semence et d'y introduire des graines ;
- diviser le lit de semence en plaques de gazon ;
- faire un traitement de cohésion, moyennant quoi la plaque de gazon obtenue n'est pas fragile, peut maintenir une forme géométrique et permet une bonne manipulation jusqu'à ce que l'étape de déposition soit terminée ;
- sécher les plaques de gazon de manière non destructive ;
- déposer la plaque de gazon et l'humidifier avant ou après l'avoir posée et l'arroser régulièrement par la suite, **caractérisé en ce que** ledit traitement de cohésion est réalisé en ajoutant un agent de cohésion pendant le mélange.

3. Procédé selon la revendication 1 ou 2, **caractérisé en ce qu'**après le séchage, la plaque de gazon est emballée dans un emballage adéquat pour sa conservation, son stockage et son transport, de préférence sous vide.

4. Procédé selon les revendications 1, 2 et 3, **caractérisé en ce que** ladite préparation d'un lit de semence comprend le dosage des composants et le mélange de ceux-ci.

5. Procédé selon la revendication 1 ou 2, **caractérisé en ce que** ladite préparation d'un lit de semence est obtenue par déposition de couches successives de divers composants.

6. Procédé selon l'une quelconque des revendications précédentes, **caractérisé en ce que** ladite division en plaques de gazon se produit en moulant le mélange dans un gabarit, une étampe ou par extrusion dans la forme de la plaque de gazon choisie.

7. Procédé selon l'une quelconque des revendications 1 à 5, **caractérisé en ce que** ladite division en plaques de gazon se produit par moulage/découpage.

8. Procédé selon l'une quelconque des revendications précédentes, **caractérisé en ce que** ladite insertion a lieu par implantation avec un semoir mécanique.

9. Procédé selon l'une quelconque des revendications précédentes, **caractérisé en ce que** ladite introduction des graines est réalisée en déposant une couche de graines.

10. Procédé selon l'une quelconque des revendications précédentes, **caractérisé en ce que** ledit séchage non destructif réduit le pourcentage d'humidité dans le lit de semence jusqu'à ce que la germination des graines ne soit plus possible et tende à préserver la possibilité d'un rétablissement futur rapide de l'activité des microorganismes sans dégrader les substances organiques naturelles ou chimiques présentes dans le lit de semence.

11. Procédé selon l'une quelconque des revendications précédentes 1 à 9, **caractérisé en ce que** ledit séchage est réalisé par exposition dans une serre ventilée.

12. Procédé selon l'une quelconque des revendications précédentes 1 à 9, **caractérisé en ce que** ledit séchage est assuré par des moyens de sources de chaleur de basses-températures et par renouvellement d'air.

13. Plaque de gazon pour cultiver des plantes, obtenue par le procédé selon l'une quelconque des revendications précédentes, comprenant un lit de semence ensemencé comportant un engrais et enveloppée ou au moins tenue ensemble par un agent de cohésion organique adéquat pour maintenir sa forme.

14. Plaque de gazon selon la revendication 13, **caractérisée en ce que** ledit agent de cohésion est biodégradable.

15. Plaque de gazon selon la revendication 13, **caractérisée en ce que** ledit agent de cohésion comprenne au moins une matière colloïdale.

16. Plaque de gazon selon la revendication 15, **caractérisée en ce que** ledit agent de cohésion comprend une colle d'origine animale ou végétale.

17. Plaque de gazon selon l'une quelconque des revendications 13 à 16, **caractérisée en ce que** ledit lit de semence comprend de la terre comportant des substances minérales et au moins une substance organique.

18. Plaque de gazon selon la revendication 17, **caractérisée en ce que** ladite substance organique comprend un ou plusieurs engrais.

19. Plaque de gazon selon les revendications 17 ou 18, **caractérisée en ce qu'**elle comprend un ou plusieurs herbicides sélectifs qui freinent la germination et la croissance des plantes qui sont différents de, et antagonistes de, celles dont la croissance est recherchée.

20. Plaque de gazon selon l'une quelconque des revendications précédentes 13 à 19, **caractérisée en ce qu'**elle a une forme géométrique qui permette de couvrir continûment la surface à être végétalisée.
